(19) Europäisches Patentamt / European Patent Office / Office européen des brevets

(11) **EP 4 382 240 A1**

(12) **EUROPEAN PATENT APPLICATION**

(43) Date of publication:
**12.06.2024 Bulletin 2024/24**

(21) Application number: **23208667.8**

(22) Date of filing: **08.11.2023**

(51) International Patent Classification (IPC):
**B23K 26/00** (2014.01)   **B23K 26/21** (2014.01)
**B23K 31/12** (2006.01)   **H01M 50/503** (2021.01)
**H01M 50/516** (2021.01)   **B23K 101/38** (2006.01)

(52) Cooperative Patent Classification (CPC):
**B23K 26/0006; B23K 26/21; B23K 31/12; H01M 50/503; H01M 50/516;** B23K 2101/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 KR 20220149372**

(71) Applicant: **SK On Co., Ltd.**
**Seoul 03161 (KR)**

(72) Inventors:
• **CHEONG, Hoe Min**
**34124 Daejeon (KR)**

• **KIM, Jae Hun**
**34124 Daejeon (KR)**
• **KIM, Hyeong Won**
**34124 Daejeon (KR)**
• **YOON, Sung Chel**
**34124 Daejeon (KR)**
• **LEE, Ki Dong**
**34124 Daejeon (KR)**

(74) Representative: **Prüfer & Partner mbB**
**Patentanwälte · Rechtsanwälte**
**Sohnckestraße 12**
**81479 München (DE)**

(54)   **SECONDARY BATTERY MODULE**

(57)   Provided is a secondary battery module including: a plurality of battery cells including electrode tabs; and a bus bar connected to the plurality of electrode tabs so that the plurality of battery cells are electrically connected to each other, wherein the bus bar includes a plate having a plurality of holes formed therein, each of the electrode tabs of the plurality of battery cells is inserted into at least a part of the plurality of holes of the plate, the electrode tab inserted into the hole and the plate are joined to each other by a weld bead, one or more of the weld beads are included, and the weld bead has a concentration deviation ($\triangle$C) satisfying the following Equation 1:

[Equation 1]

$$\text{Concentration deviation } (\triangle C) < 5 \text{ wt\%}$$

wherein the concentration deviation ($\triangle$C) refers to a difference between an average copper concentration (C1) of a left side and an average copper concentration (C2) of a right side based on a center line of the hole in a section of the weld bead in a thickness direction of the plate.

FIG. 2

EP 4 382 240 A1

**Description**

**TECHNICAL FIELD**

The following disclosure relates to a secondary battery module.

**BACKGROUND**

In recent years, requirements for a high-capacity and high-output secondary battery have been increasing and development of a secondary battery which requires high energy density, high performance, and a high level of reliability corresponding to the requirements is needed. When a positive/negative electrode is configured in the manufacture of a secondary battery, the positive/negative electrode is required to be joined so that cells are electrically connected to each other, and in general, a method for joining dissimilar materials using an aluminum member, a copper member, and the like is widely used. Both the aluminum member and the copper member are widely used in electronic electrical parts, heat dissipation parts, or the like since they have excellent electrical conductivity and thermal conductivity, and in recent years, a joint body obtained by joining a copper member and an aluminum member is demanded from the point of view of miniaturizing and lightening the electronic electrical parts, the heat dissipation parts, or the like.

In particular, in a method of electrically connecting cells which requires a high level of reliability, various methods such as ultrasonic welding, laser welding, and mechanical (bolt/nut) bonding are used, but in order to respond to the increasing energy density requirements, laser welding is being used as the most common joining method.

Meanwhile, high welding quality needs to be secured from the point of view of long-term reliability of a battery.

**SUMMARY**

According to an aspect of the present disclosure, a weld bead which may have a welded portion having excellent mechanical properties and electrical properties and a secondary battery module including the weld bead may be provided.

According to another aspect of the present disclosure, a weld bead which suppresses occurrence of cracks in the weld bead to improve welding reliability and long-term reliability of a battery and a secondary battery module including the weld bead may be provided.

The secondary battery module of the present disclosure may be widely applied to a green technology field such as electric vehicles, battery charging stations, and other solar power generations and wind power generations using batteries. In addition, the secondary battery module of the present disclosure may be used in eco-friendly electric vehicles, hybrid vehicles, and the like which suppress air pollution and greenhouse gas emissions to prevent climate change.

In one general aspect, a secondary battery module includes: a plurality of battery cells including electrode tabs; and a bus bar connected to the plurality of electrode tabs so that the plurality of battery cells are electrically connected to each other, wherein the bus bar includes a plate having a plurality of holes formed therein, each of the electrode tabs of the plurality of battery cells is inserted into at least a part of the plurality of holes of the plate, the electrode tab inserted into the hole and the plate are joined to each other by a weld bead, one or more of the weld beads are included, and the weld bead has a concentration deviation ($\triangle$C) satisfying the following Equation 1:

$$[\text{Equation 1}]$$

$$\text{Concentration deviation } (\triangle C) < 5 \text{ wt\%}$$

wherein the concentration deviation ($\triangle$C) refers to a difference between an average copper concentration (C1) of a left side and an average copper concentration (C2) of a right side based on a center line of the hole in a section of the weld bead in a thickness direction of the plate.

In an exemplary embodiment, the weld bead may satisfy the concentration deviation ($\triangle$C) of 3 wt% or less.

In an exemplary embodiment, the concentration deviation ($\triangle$C) may be measured by scanning electron microscope (SEM)-energy dispersive X-ray spectroscopy (EDS) .

In an exemplary embodiment, the weld bead is a weld bead having symmetry and may be bilaterally symmetrical about the center line of the hole in the section of the weld bead in the thickness direction of the plate.

In an exemplary embodiment, the weld bead having symmetry may satisfy the following Equations 2 and 3:

[Equation 2]

$$0.90L2 \leq L1 \leq 1.1L2$$

[Equation 3]

$$0.90D2 \leq D1 \leq 1.1D2$$

wherein L1 and L2 refer to the shortest distances from intersecting points (P100 and P200) to boundary points (P1 and P2), and D1 and D2 refer to distances from the intersecting points (P100 and P200) to a joining interface of the weld bead in the direction perpendicular to L1 and L2, in which the boundary points (P1 and P2) refer to boundary points (P1 and P2) on a left side and a right side where the joining interface of the weld bead and a weld bead surface meet, and the intersecting points (P100 and P200) refer to intersecting points (P100 and P200) on a left side and a right side where lines perpendicular to the center line of the hole from the boundary points (P1 and P2) to the center line of the hole and imaginary lines (L100 and L200) extended from the boundary surface of the electrode tab intersect vertically.

In an exemplary embodiment, the weld bead may include a cover portion having a convex shape which covers the hole; and a pillar portion loaded into the hole in the section of the weld bead in the thickness direction of the plate.

In an exemplary embodiment, the electrode tab may be made of aluminum, and the plate may be made of copper.

In an exemplary embodiment, the weld bead may have a copper concentration of 40% or less.

In an exemplary embodiment, the weld bead may have a dilution rate of the plate of 40% or less.

In an exemplary embodiment, the battery cell may be a secondary battery module which is a pouch type battery cell.

Other features and aspects will be apparent from the following detailed description, the drawings, and the claims.

**BRIEF DESCRIPTION OF THE DRAWINGS**

FIG. 1 is a drawing showing an imaginary surface making a section of a weld bead in a thickness direction of a plate according to an exemplary embodiment.

FIG. 2 is a schematic diagram of a section showing that the weld bead is formed together with the plate by heating and melting an electrode tab end which penetrates a hole of the plate with a laser.

FIG. 3 shows a left side and a right side based on a center line of the hole in the section of the weld bead in the thickness direction of the plate according to an exemplary embodiment.

FIG. 4 shows intersecting points (P100 and P200) on a left side and a right side where lines perpendicular to the center line of the hole from boundary points (P1 and P2) on a left side and a right side where a joining interface of the weld bead and a weld bead surface meet to the center line of the hole and imaginary lines (L100 and L200) extended from a boundary surface of the electrode tab intersect vertically, in a section of the weld bead in the thickness direction of the plate, according to an exemplary embodiment.

FIG. 5 shows L1 and L2 which are the shortest distances from the intersecting points (P100 and P200) to the boundary points (P1 and P2), and D1 and D2 which are distances from the intersecting points (P100 and P200) to the joining interface of the weld bead in the direction perpendicular to L1 and L2, according to an exemplary embodiment.

FIG. 6 is a drawing showing a welding process using a laser according to an exemplary embodiment.

FIG. 7 is a drawing showing a bus bar included in a secondary battery module according to an exemplary embodiment.

FIG. 8 is a drawing showing a secondary battery module having a weld bead according to an exemplary embodiment.

FIG. 9 shows the weld bead according to Example 2 of which the image is analyzed by an optical microscope (OM).

FIG. 10 shows the weld bead according to Comparative Example 1 of which the image is analyzed by an optical microscope (OM).

[Detailed Description of Main Elements]

110: battery cell, 120: electrode tab, 150: bus bar, 150a: plate, 150c: hole, 151: insertion portion, 151a: tap connecting portion, 151b: groove, t1: thickness direction of plate, t2: thickness direction of electrode tab, 170: weld bead, L: laser, T: thickness of electrode tab, H: height of weld bead, W: width of weld bead, CL: center line of hole, P1: boundary point on left side, P2: boundary point on right side, P100: intersecting point on left side, P200: intersecting point on right side

**DETAILED DESCRIPTION OF EMBODIMENTS**

Hereinafter, the present disclosure will be described in detail with reference to the accompanying drawings. However, it is only illustrative and the present disclosure is not limited to the specific embodiments which are illustratively described in the present disclosure.

Technical terms and scientific terms used in the present specification have the general meaning understood by those skilled in the art to which the present disclosure pertains unless otherwise defined, and a description for the known function and configuration obscuring the gist of the present disclosure will be omitted in the following description and the accompanying drawings.

In addition, the singular form used in the specification and claims appended thereto may be intended to include a plural form also, unless otherwise indicated in the context.

In the present specification and the appended claims, the terms such as "first" and "second" are not used in a limited meaning but are used for the purpose of distinguishing one constituent element from other constituent elements.

In the present specification and the appended claims, the terms such as "comprise" or "have" mean that there is a characteristic or a constitutional element described in the specification, and as long as it is not particularly limited, a possibility of adding one or more other characteristics or constitutional elements is not excluded in advance.

In the present specification and the appended claims, when a portion such as a membrane (layer), a region, and a constituent element is present on another portion, not only a case in which the portion is in contact with and directly on another portion but also a case in which other membranes (layers), other regions, other constitutional elements, and the like are interposed between the portions is included.

A "crack" used without particular mention in the present specification has a meaning including high-temperature crack, a low-temperature crack, or an embrittlement crack.

During laser welding of dissimilar materials, an intermetallic compound (IMC) is produced, and since the intermetallic compound (IMC) has the physical properties of high electrical resistance and hardness, the mechanical properties of a welded portion are adversely affected; for example, the weld becomes brittle, and the characteristics of a battery may be adversely affected by an increase in resistance in an electrical connection between battery cells. In addition, when any one of a high-temperature crack, a low-temperature crack, or an embrittlement crack occurs in the welded portion, a serious defect may be caused, and thus, a crack causing factor needs to be removed in terms of long-term reliability of a battery.

Though laser welding methods in various manners for solving the problem, for example, a method in a manner of overlapping singular or plural electrode tabs and bus bars is being used, there is a limitation of high welding failure such as weak welding after welding, and also bending and cutting of a plurality electrode tabs in a unit module for welding are needed to cause a process increase and a management cost increase.

Besides, a weld bead having an asymmetric structure is formed to cause a high tensile strength deviation and deteriorated mechanical properties, so that it is difficult to secure stable welding quality, a low-quality weld bead having low uniformity is formed so that a safety rate of a product corresponding to requirements such as vibration resistance and impact resistance tests may not be secured, and occurrence of a high-temperature crack, a low-temperature crack, or an embrittlement crack is not suppressed to deteriorate welding reliability and long-term reliability of a battery.

Thus, a secondary battery module including: a plurality of battery cells including electrode tabs; and a bus bar connected to the plurality of electrode tabs so that the plurality of battery cells are electrically connected to each other is provided, wherein the bus bar includes a plate having a plurality of holes formed therein, each of the electrode tabs of the plurality of battery cells is inserted into at least a part of the plurality of holes of the plate, the electrode tab inserted into the hole and the plate are joined to each other by a weld bead, one or more of the weld beads are included, and the weld bead has a concentration deviation ($\triangle$C) satisfying the following Equation 1:


$$[\text{Equation 1}]$$

$$\text{Concentration deviation } (\triangle\text{C}) < 5 \text{ wt\%}$$


wherein the concentration deviation ($\triangle$C) refers to a difference between an average copper concentration (C1) of a left side and an average copper concentration (C2) of a right side based on a center line of the hole in a section of the weld bead in a thickness direction of the plate.

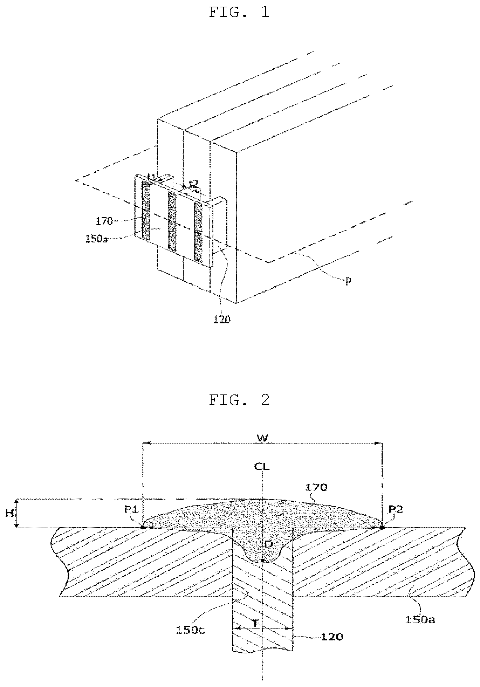

Specifically, the section of a weld bead 170 in the thickness direction of the plate refers to a section cut by an imaginary surface (imaginary surface having an in-plane thickness direction) parallel to the thickness direction of the plate, but the section may refer to a weld section cut to a minimum area of the weld bead 170. Referring to FIG. 1, an imaginary surface (p) forming a cut section of the weld bead 170 may refer to an imaginary surface which is parallel to a thickness direction (t1) of a plate 150a and also parallel to a thickness direction (t2) of an electrode tab 120, and a section of the weld bead 170 may refer to a section cut by the imaginary surface (p) described above.

According to an exemplary embodiment, FIG. 2 is a section schematic diagram showing that an end of the electrode tab 120 penetrating a hole 150c of a plate 150a of the bus bar is heated and melted by a laser to form the weld bead 170. Herein, a center line (CL) of the hole 150c may be identical to a center line of the electrode tab since the electrode tab is inserted into the hole.

The concentration deviation (△C) is particularly important when the electrode tab and the plate are made of dissimilar metals of different materials (metal materials). As in an exemplary embodiment described later, in the case in which the electrode tab is made of aluminum and the bus bar is made of copper, when the concentration deviation (△ C) satisfies less than 5 wt%, the mechanical properties and the electrical properties of the weld bead 170 may be significantly improved, and also, the uniformity of the weld bead is excellent, thereby suppressing occurrence of a crack such as a high-temperature crack, a low-temperature crack, of an embrittlement crack to improve long-term reliability. Specifically, the weld bead may satisfy the concentration deviation (△C) of 4 wt% or less, and more specifically, the concentration deviation (△C) of 3 wt% or less. Herein, a lower limit of the concentration deviation (△C) may be 0 wt% or 0.1 wt%, but is not limited thereto.

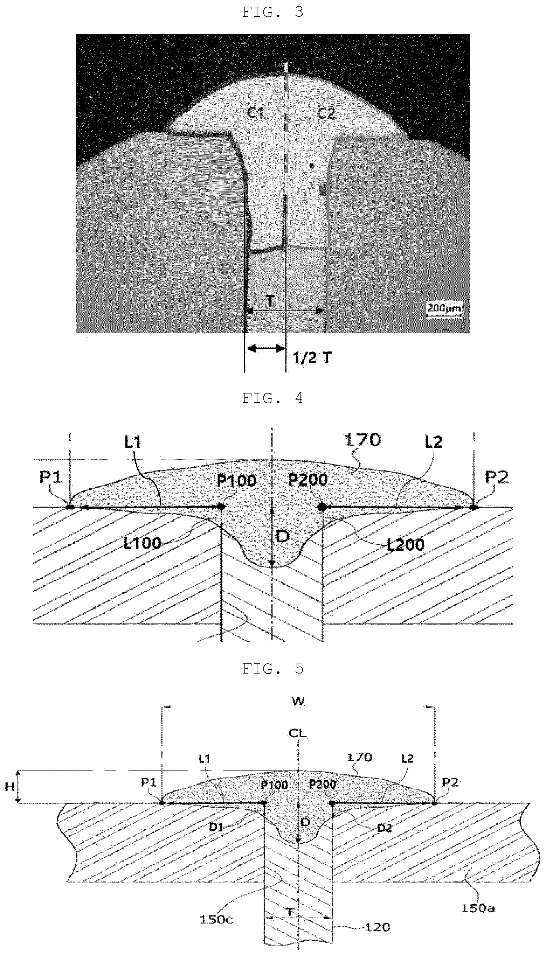

In an exemplary embodiment, the concentration deviation (△C) may be measured by scanning electron microscopic (SEM)-energy dispersive X-ray spectroscopic (EDS) analysis. The energy dispersive X-ray spectroscopy (EDS) is equipment used by attaching a detector to a scanning electron microscope (SEM), and composition analysis throughout the weld may be qualified by detection of characteristic X-rays among various signals emitted by an interaction between a sample surface and electron beam. Specifically, an average copper concentration (C1) of a left side and an average copper concentration (C2) of a right side based on the center line of the hole in the section of the weld bead in the thickness direction of the plate were measured, respectively, as in FIG. 3, by scanning electron microscopic (SEM)-energy dispersive X-ray spectroscopic (EDS) analysis, and a difference therebetween, |C1-C2 | is calculated, thereby deriving the concentration deviation (△C).

In an exemplary embodiment, the weld bead is a weld bead having symmetry and may be bilaterally symmetrical about the center line of the hole in the section of the weld bead in the thickness direction of the plate. When the concentration deviation (△C) satisfies less than 5 wt% and also satisfies morphological symmetry such as bilateral symmetry, formation of the intermetallic compound (IMC) may be prevented to show excellent tensile strength and mechanical properties, and uniformity of the weld bead may be significantly excellent to suppress occurrence of a high-temperature crack, a low-temperature crack, or an embrittlement crack, and thus, weld reliability and long-term reliability of a battery may be improved.

In an exemplary embodiment, the weld bead having symmetry may satisfy the following Equations 2 and 3:

$$[\text{Equation 2}]$$

$$0.90L2 \leq L1 \leq 1.1L2$$

$$[\text{Equation 3}]$$

$$0.90D2 \leq D1 \leq 1.1D2$$

wherein L1 and L2 refer to the shortest distances from intersecting points (P100 and P200) to boundary points (P1 and P2), and D1 and D2 refer to distances from the intersecting points (P100 and P200) to a joining interface of the weld bead in the direction perpendicular to L1 and L2. Herein, the boundary points (P1 and P2) refer to boundary points (P1 and P2) on a left side and a right side where the joining interface of the weld bead and a weld bead surface meet, and the intersecting points (P100 and P200) refer to intersecting points (P100 and P200) on a left side and a right side where lines perpendicular to the center line of the hole from the boundary points (P1 and P2) to the center line of the hole and imaginary lines (L100 and L200) extended from the boundary surface of the electrode tab intersect vertically.

Referring to FIG. 4, intersecting points (P100 and P200) on a left side and a right side where lines perpendicular to the center line of the hole from boundary points (P1 and P2) on a left side and a right side where a joining interface of the weld bead and a weld bead surface meet to the center line of the hole and imaginary lines (L100 and L200) extended from a boundary surface of the electrode tab intersect vertically may be confirmed.

Based on the fact, L1 and L2 which are the shortest distances from the intersecting points (P100 and P200) to the boundary points (P1 and P2), and D1 and D2 which are distances from the intersecting points (P100 and P200) to the joining interface of the weld bead in the direction perpendicular to L1 and L2 may be derived, as in FIG. 5. Since when molten metal derived from welding base materials such as an electrode tab and a plate (bus bar) is cooled to form the weld bead 170, Equations 2 and 3 are satisfied, the weld bead may have morphological symmetry, the weld portion may show uniform tensile strength and excellent mechanical properties, and weld failure may be minimized to secure stable welding quality. Specifically, Equation 2 may be $0.95L2 \leq L1 \leq 1.05L2$ and Equation 3 may be $0.95D2 \leq D1 \leq 1.05D2$, and more specifically, Equation 2 may be $0.98L2 \leq L1 \leq 1.02L2$ and Equation 3 may be $0.98D2 \leq D1 \leq 1.02D2$.

In Equations 2 and 3, L1, L2, D1, and D2 may be measured by image analysis with an optical microscope (OM). Specifically, after performing a specimen pretreatment process such as welding specimen cutting, mold manufacturing and mounting, and specimen surface polishing, observation with an optical microscope is performed to obtain an image and L1, L2, D1, and D2 may be derived based on that.

The weld bead 170 having symmetry may satisfy Equation 1 and also further satisfy Equations 2 and 3. Since it satisfies all of the equations, occurrences of a high-temperature crack, a low-temperature crack, and an embrittlement crack are all suppressed to improve welding reliability and long-term reliability of a battery, formation of an intermetallic compound (IMC) may be minimized, and excellent tensile strength, mechanical properties, and electrical properties such as reduced electrical resistance may be further improved to secure stable welding quality.

In an exemplary embodiment, the weld bead 170 may include a cover portion having a convex shape which covers the hole 150c in the section of the weld bead 170 in the thickness direction of the plate and a pillar portion inserted into the hole 150c. Specifically, the pillar portion refers to an area inserted into the hole 150c below a line connecting the boundary points (P1 and P2) on the left side and the right side where the joining interface of the weld bead and the weld bead surface meet. According to the present disclosure, a laser welding method may be penetrating the electrode tab through the plate to protrude the welding portion and then irradiating the protruded welded portion with a laser beam to perform welding, differently from a conventional technology such as an overlapping welding method. A shape of the weld bead 170 including the cover portion and the pillar portion may be produced by the welding method. Specifically, unit cells are laminated to form a laminate including a certain number of cells, and then the plate may be assembled in a direction of inserting the electrode tab for an electrical connection. Herein, the plate has a predetermined interval so that the processed electrode tab is penetrated and comes out, and a hole corresponding to each electrode tab may be provided to provide a surface protruding in a predetermined interval in a passing direction of the electrode tab along an outer circumference of the hole. After the electrode tab is assembled as such, it penetrates the plate and protrudes therefrom, and then the protruded welded portion may be irradiated with the laser beam to perform welding.

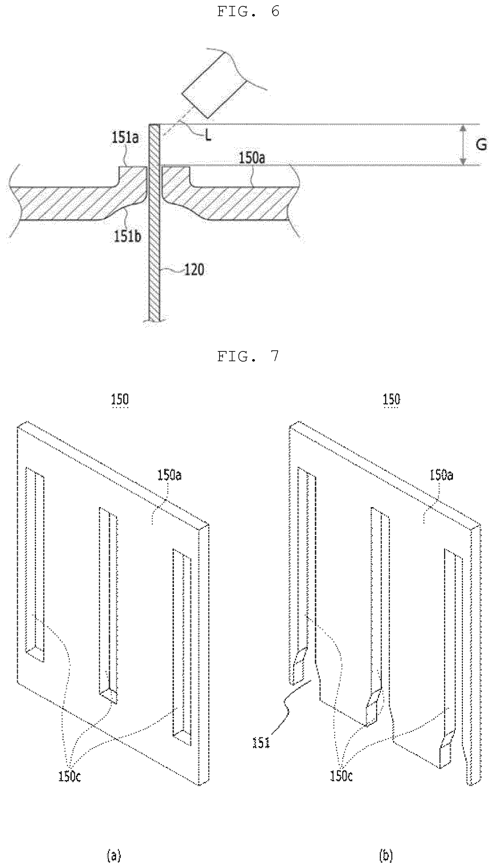

Specifically, when the laser beam is irradiated (L) as in FIG. 6, a laser irradiation position is searched so that a protrusion amount (tolerance, G) of the electrode tab penetrating the plate is 2.0 or less to finally select the laser irradiation position and automatic welding may be performed. Herein, the laser irradiation position and output may be automatically adjusted to perform welding depending on the protrusion amount of the electrode in a laser output range of 15 to 30 J/mm and in the tolerance range. When the welding is performed by the welding method, a weld bead which has high uniformity and symmetry and further satisfies the above Equations 1, 2, and 3 may be formed. The tolerance may be 1 mm or less, preferably 0.5 mm or less. The laser output may be in a range of 15 to 25 J/mm, preferably 15 to 20 J/mm.

When molten metal derived from a welded base material during laser welding is cooled to form the weld bead 170, various weld beads 170 are formed depending on the thickness, material, and protrusion amount of the electrode tab, the material, plating material, and thickness of the plate, a welding length, a welding speed, a laser power, and a laser irradiation pattern. In particular, the own shape of the weld bead 170 including the cover portion and the pillar portion may affect the mechanical properties of the welded portion. Since the concentration deviation of the weld bead 170 satisfies Equation 1 and also satisfies morphological symmetry, the weld bead may have excellent mechanical properties and electrical properties to secure stable welding quality.

In an exemplary embodiment, the weld bead 170 may have a dilution rate of the plate of 40% or less. Depending on the dilution rate of the composition of the weld bead 170, for example, copper-aluminum in the case of a copper-aluminum dissimilar material during the dissimilar material welding, mechanical properties may be improved without substantial deterioration of electrical properties. In general, the dilution rate refers to a contribution degree of each welding base material to the entire welding with or without addition of a filler, and in a welding metal section image, may be measured as an area in which each component is melted and mixed. That is, the dilution rate of the plate may refer to a contribution degree of the plate of the plate and the electrode tab to the entire welding with or without addition of a filler. The dilution rate may vary depending on a welding heat input capacity, thermal characteristics, an initial joint shape, and dimensions. During welding of the dissimilar material such as the electrode tab being made of aluminum and the bus bar being made of copper, a melting amount of a copper plate (bus bar) is increased, so that the tab may cause formation of an intermetallic compound (IMC) on a copper-aluminum interface. In an exemplary embodiment of the present disclosure, when the dilution rate of the plate is 40% or less, intermetallic compound (IMC) formation and crack occurrence in the welded portion may be minimized, and the weld bead 170 may have decreased crack occurrence and form a stronger welded portion. Specifically, the weld bead 170 may have a dilution rate of the plate of 30% or less, 20% or less, 15% or less, 5% or less and 1% or more or between the numerical values, and for example, 1 to 5%.

Specifically, for the details of each of the dilution rates of the electrode tab and the plate, when the electrode tab is a first base material of welding and the plate is a second base material of welding, the dilution rate of the first base material may be 70 to 99% and the dilution rate of the second base material may be 1 to 30%, specifically, the dilution rate of the first base material may be 85 to 99% and the dilution rate of the second base material may be 1 to 15%, and more specifically, the dilution rate of the first base material may be 95 to 99% and the dilution rate of the second base material may be 1 to 5%.

The weld bead 170 may have a copper content of 40% or less. When the copper is included in excess, a probability of formation of the intermetallic compound (IMC) is increased, and due to an increase in brittleness by precipitation, a decrease in strength or ductility of the weld bead may be caused. The occurrence of the intermetallic compound (IMC) may be minimized within the range to implement stable welding quality and minimize crack occurrence. Specifically, a copper content may be 20 wt% or less, 5 wt% or less and 1 wt% or more or between the numerical values, and for example, may be 1 to 5 wt%.

A surface plating layer may be formed on the electrode tab which is the first base material (welding base material) and/or the plate which is the second base material. As the electrode tab and/or the plate includes a surface plating layer, electrical/chemical stability to an electrolyte solution may be realized. As known in the art, the surface plating layer for securing electrical/chemical stability to an electrolyte solution may include Ni, Sn, Si, Mg, Fe, Mn, Zn, Cr, Li, Ca, or an alloy thereof. When the surface plating layer is present on the electrode tab and/or the plate, the dilution rate of the surface plating layer itself may also be calculated by analysis of the components of the weld bead 170 including the first base material, the second base material, and the plating component described above, of course. As described above, the composition component of the weld metal (weld bead) throughout the weld may be quantified by energy dispersive spectroscopy (EDS) for all process factors.

In an exemplary embodiment, the electrode tab may be made of aluminum, and the plate may be made of copper. Herein, the aluminum material may be aluminum having a purity of 50 wt% or more, specifically a purity of 55 wt% or more, 99 wt% or more, or 99.5 wt% or more. In an exemplary embodiment, the aluminum material may be industrial pure aluminum, and may include Aluminum 1000 series such as Aluminum 1050, Aluminum 1100, or Aluminum 1200, as a commercial product. A copper material may be copper having a purity of 58 wt% or more, 99 wt% or more, or 99.3 wt% or more. In an exemplary embodiment, the copper material may include C10100-C13000 series such as C11000, C10100, C10200, or C12500, as a commercial product. However, these are illustrative, and if necessary, the electrode tab may be made of a copper material and the plate may be made of an aluminum material.

Hereinafter, the present disclosure will be described in more detail, referring to the attached drawings.

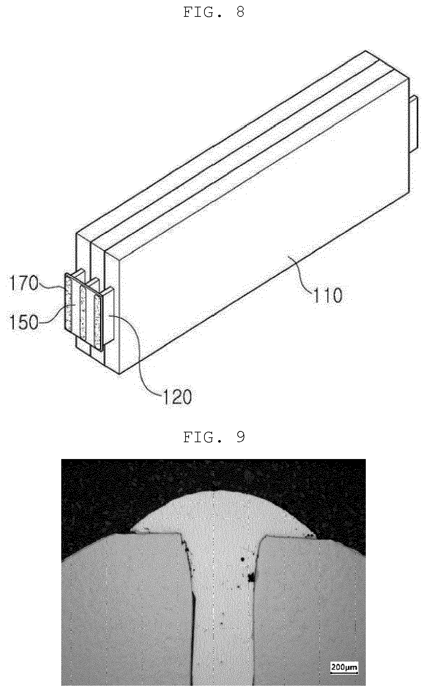

FIG. 7 is a drawing showing a bus bar 150 provided in a secondary battery module, according to an exemplary embodiment of the present disclosure, and FIG. 8 is a drawing showing a secondary battery module having the weld bead 170 according to an exemplary embodiment of the present disclosure.

As shown in (a) of FIG. 7, the secondary battery module of an exemplary embodiment includes a bus bar 150, and the bus bar 150 is configured by including a plate 150a and a hole 150c formed in the plate. Herein, the plate may include a plurality of holes 150c which may accommodate a plurality of electrode tabs 120, respectively, and each hole 150c may have a shape and a size which correspond to the section of the electrode tab 120, so that the end of the electrode tab 120 may be inserted into the hole 150c.

According to another exemplary embodiment, as shown in (b) of FIG. 7, each hole 150c may include an insertion portion 151 having an open end so that the electrode tab 120 may be slide inserted. Specifically, the insertion portion may have a tapered shape which widens toward the open side so that the electrode tab 120 may be easily slide-inserted into the hole 150c, but the shape of the insertion portion 151 is not limited thereto. When both ends of the hole 150c are blocked as shown in (a) of FIG. 7, the electrode tab 120 may be inserted into the hole 150c of the plate 150a in a protrusion direction of the electrode tab 120, and when one end of the hole 150c is open as shown in (b) of FIG. 7, the electrode tab 120 may be inserted into the hole 150c of the plate 150a in a standing direction (width direction) of the electrode tab 120 through the insertion portion 151. The plate 150a has one or more holes 150c formed, and the electrode tab 120 inserted into each hole 150c may be welded to electrically connect a plurality of welded battery cells 110.

As shown in FIG. 8, the secondary battery module according to the present disclosure may be configured by including a plurality of battery cells 110 and the electrode tab 120 led from the battery cell 110, and has a structure in which the electrode tab 120 is inserted into the hole 150c formed in the plate 150a and then welding is performed to connect the battery cell 110, and the shape of the electrode tab 120 does not need to be separately deformed as in the conventional technology. In addition, one or more holes 150c may be formed in the plate 150c so that the number of holes correspond to the number of battery cells 110 to be connected. Therefore, the battery cell 110 may be electrically connected without deformation of the shape of the electrode tab 120, regardless of the number of the battery cells 110 to be connected.

That is, in the present disclosure, the plate 150a forming the bus bar 150 includes one or more holes 150c having a previously set interval, and the electrode tab 120 which is inserted into and penetrates the hole 150c may be welded to electrically connect the plurality of battery cells 110. Herein, since the electrode tab 120 may be inserted and welded into every hole 150c, the plurality of battery cells 110 welded through the bus bar may be electrically connected. In the present disclosure, the hole 150c may be formed into a slit shape, but may be replaced with another shape as long as it does not depart from the scope of the present disclosure.

Meanwhile, in the secondary battery module of the present disclosure, the electrode tab 120 is penetrated through the hole 150c of the plate and then is laser welded, thereby obtaining various shapes of the weld beads 170. When the weld bead 170 has the specific shape and size described later, mechanical properties including tensile strength may be further improved without deterioration of electrical properties and the resistance of the module may be decreased. Since the specific shape and size of the weld bead 170 described later correspond to supplement application in addition to the concentration deviation ($\triangle$C) like Equation 1 described above or the morphological symmetry like Equations 2 and 3, they may be replaced with other constituent elements as long as they do not depart from the scope of the present disclosure.

Specifically, the weld bead 170 may have a width (W) and a height (H) satisfying the following Equations 4 and 5:

$$[\text{Equation 4}]$$

$$0 < W < 7T$$

wherein W is a width of the weld bead 170 based on the section of the weld bead 170 in the thickness direction of the plate, and T is a thickness of the electrode tab;

$$[\text{Equation 5}]$$

$$0 < H < 3T$$

wherein H is a height of the weld bead 170 based on the section of the weld bead 170 in the thickness direction of the plate, and T is a thickness of the electrode tab. Herein, the unit of T may be mm.

In the dissimilar material welding, when the width (W) of the weld bead 170 is 7T or more, formation of the intermetallic compound (IMC) between dissimilar materials may be caused. In an exemplary embodiment, the electrode tab is made of aluminum, and when the bus bar is made of copper, in the case in which the width of the weld bead 170 is 7T or more, the melting amount of the copper plate (bus bar) is increased to cause formation of the intermetallic compound (IMC) on a copper-aluminum interface to cause quality degradation of the welded portion such as microcracks or increased resistance in the welded portion. In addition, when the height (H) of the weld bead 170 is 3T or more, the length of the pillar portion of the weld bead 170 may be shortened to decrease interfacial joining strength. Specifically, for securing stable welding quality, the width (W) of the weld bead 170 may be 2T to 6T, more specifically 3T to 6T and the height (H) may be 0.5T to 2T, more specifically 1 to 2T. When the width and height of the weld bead 170 are satisfied, the weld bead may have improved tensile strength and low contact resistance to show excellent welding characteristics.

The width and height of the weld bead 170 described above directly affect the sectional area of the weld bead 170. Thus, in another exemplary embodiment, the electrode tab inserted into the hole 150c and the plate are joined by the weld bead 170, but the weld bead 170 may satisfy the following Equation 6:

$$[\text{Equation 6}]$$

$$0 < A < 21T^2$$

wherein A is a sectional area of the weld bead 170 based on the section of the weld bead 170 in the thickness direction of the plate, and T is a thickness of the electrode tab. Herein, the section of the weld bead 170 in the thickness direction of the plate is as described above based on Equations 4 and 5.

The weld bead 170 may have the sectional area (A) of less than $21T^2$. In the case in which the sectional area is $21T^2$ (mm2) or more, various types of problems such as increased intermetallic compound (IMC) occurrence, deteriorated welding strength, and crack occurrence in the welded portion may occur. More specifically, the sectional area of the weld bead 170 may satisfy $T^2$ to $12T^2$, based on the section of the weld bead 170. When the sectional area of the weld bead 170 is satisfied, the weld bead has improved tensile strength and low contact resistance to show excellent welding characteristics, and may show constant welding characteristics without being substantially affected by specific welding conditions.

FIG. 2 shows formation of the weld bead 170 by heating and melting the end of the electrode tab 120 penetrating the hole 150c of the plate 150a of the bus bar 150 according to an exemplary embodiment of the present disclosure with a laser.

As shown in FIG. 2, the width (W) of the weld bead may be the width of the cover portion, based on the section of the weld bead 170. Specifically, the width (W) of the weld bead may refer to a distance between two boundary points (P1 and P2) on the left side and the right side where the joining interface of the weld bead and the weld bead surface meet. Herein, since the example shown in FIG. 2 is the case in which the two boundary points (P1 and P2) on the left and right are at the same height, the width of the weld bead is shown as in FIG. 2, and when the two boundary points (P1 and P2) on the left and right are not at the same height, the width of the weld bead may be defined as the shortest distance between the two boundary points.

As shown in FIG. 2, the height (H) of the weld bead may be a maximum height of the cover portion, based on the section of the weld bead 170. Specifically, the height (H) of the weld bead may be a distance (shortest distance) between an imaginary line connecting the boundary points (P1 and P2) on the left side and the right side where the joining interface of the weld bead and the weld bead surface meet and highest points of the cover portion, in the section of the weld bead 170 in the thickness direction of the plate. Herein, since the example shown in FIG. 2 is the case in which the two boundary points (P1 and P2) on the left and right are at the same height, the height of the bead is only shown as in FIG. 2, and the height of the weld bead may be defined as the shortest distance between an imaginary line connecting the two boundary points and the highest points of the cover portion.

In an exemplary embodiment, the weld bead 170 may further satisfy Equation 7:

$$[\text{Equation 7}]$$

$$0.4T \leq D \leq 2T$$

wherein D is a penetration depth into the hole 150c of the weld bead 170, based on the section of the weld bead 170 in the thickness direction of the plate, and T is a thickness of the electrode tab. Specifically, the penetration depth may be a distance (shortest distance) between the imaginary line connecting the two boundary points (P1 and P2) on the left and right and the lowest point of the weld bead 170 inside the hole 150c. The penetration depth may correspond to the length of the pillar portion. The penetration depth may be a factor related to the mechanical properties by the shape of the weld bead 170 itself and the dilution rate of the plate. When the penetration depth satisfies a penetration depth of 0.4T to 2T, specifically 0.5T to 1.5T, and more specifically 0.5T to 1.0T, the dilution rate of the plate is controlled to 5% or less to improve the mechanical properties by the shape of the weld bead 170.

The electrode tab 120 is configured to penetrate the hole 150c in a vertical direction to the surface of the plate 150c, and the thickness may be 0.2 mm or more. More specifically, the thickness of the electrode tab 120 may be 0.2 to 1.0 mm. When the electrode tab 120 has a thickness of 0.2 mm or more, a weld bead 170 having the specific shape described above by laser welding and the dilution rate of the plate of 10% or less may be produced, which is thus favorable.

In addition, in the present disclosure, the plate 150a may have a thickness of 0.5 mm or more. In an exemplary embodiment, it may have a thickness of 0.5 mm to 10 mm, 1 mm to 8 mm, or 1 mm to 6 mm, but is not necessarily limited thereto.

In an exemplary embodiment, the battery cell 110 may be a pouch type battery cell 110. The pouch type battery cell 110 may be a battery cell 110 in which an electrode assembly including a positive electrode, a negative electrode, and a separator interposed between the positive electrode and the negative electrode is sealed in the pouch in an impregnated state. The pouch may have a multilayer film structure in which a metal film such as an aluminum film is interposed between an outer layer film and an inner layer film, but is not limited thereto. In the secondary battery module according to an exemplary embodiment, the electrode tab of each of a plurality pouch type battery cells 110 which are laminated in one direction may be inserted into each hole 150c of the plate and welded to electrically connect the plurality of pouch type battery cells 110 top each other.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

**Example 1**

A secondary battery module including a weld bead which had a concentration deviation (△C) between unit areas of 4 wt% and satisfied morphological symmetry with L1=0.92L2 and D1=1.05D2, according to an exemplary embodiment of the present disclosure, was prepared. Specifically, the weld bead was formed by an automatic laser welding system in which an aluminum electrode tab was inserted into a hole of a copper plate, a laser irradiation position was searched so that a protrusion amount (tolerance, G) of the electrode tab penetrating the plate was 2.0 mm or less to finally determine the laser irradiation position, and a laser output was automatically adjusted in a range of 15 to 25 J/mm to perform welding. The concentration deviation (△C) was derived by a scanning electron microscopic (SEM)-energy dispersive X-ray spectroscopic (EDS) analysis device.

**Example 2**

The same procedure was carried out as in Example 1, with the exception of the details that are described later. A secondary battery module including a weld bead which had the concentration deviation (△C) between unit areas of 2 wt% and satisfied morphological symmetry with L1=0.98L2 and D1=0.98D2 was prepared. Specifically, the weld bead was formed by an automatic laser welding system in which the aluminum electrode tab was inserted into the hole of the copper plate, the laser irradiation position was searched with a laser output of 15 to 20 J/mm so that the protrusion amount (tolerance, G) of the electrode tab penetrating the plate was 0.5 mm or less to finally determine the laser irradiation position and perform welding. An image in which the weld bead was image analyzed by an optical microscope (OM) is shown in FIG. 9.

**Comparative Example 1**

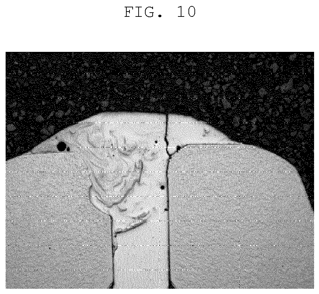

The same procedure was carried out as in Example 1, with the exception of the details that are described later. A secondary battery module including a weld bead which had the concentration deviation (△C) between unit areas of 12 wt%, and L1=1.45L2 and D1=1.30D2 was prepared. Specifically, the weld bead was formed by an overlapping welding method in which an aluminum electrode tab was laminated in an overlapping manner on a copper plate without a hole and then a laser output was set to 9 J/mm. An image in which the weld bead was image analyzed by an optical microscope (OM) is shown in FIG. 10.

**Comparative Example 2**

The same procedure was carried out as in Example 1, with the exception of the details that are described later. A secondary battery module including a weld bead which had the concentration deviation (△C) between unit areas of 9 wt%, and L1=1.10L2 and D1=1.20D2 was prepared. Specifically, the weld bead was formed by inserting an aluminum electrode tab into the hole of the copper plate and then irradiating the weld bead with a laser with a laser output of 9 J/mm, obliquely at an angle of about 20 to 35° to a central axis in a longitudinal direction of the electrode tab. At this time, a process of selecting a laser irradiation position depending on a tolerance position search and a process of adjusting a laser output were both excluded, and only laser welding depending on a stationary position was performed.

**Evaluation Example**

The mechanical properties were evaluated by measuring the tensile strength of the weld bead with a test under a condition of 20 mm/min using a Universal test machine.

In order to evaluate the concentration deviation (△ C) of the weld bead and production of an intermetallic compound (IMC), the composition of the weld bead (copper wt%) was quantified by scanning electron microscope (SEM)-energy dispersive X-ray spectroscopy (EDS) and analyzed.

A ratio of L1 and L2 and a ratio of D1 and D2 were measured by image analysis of the weld bead with an optical microscope (OM) to evaluate the morphological symmetry.

For a high-temperature crack, it was searched whether cracks occurred on the weld bead surface during the welding process and when no crack occurred, it was marked as o and when cracks occurred, it was marked as ×.

For a low-temperature crack, after the welding process was performed, the weld bead was allowed to stand at room temperature (25°C) for 5 days to search whether there was crack occurrence on the weld bead surface. When no crack occurred, it was marked as ×, and when cracks occurred, it was marked as o.

For an embrittlement crack, it was searched whether cracks occurred on the weld bead surface under a real use evaluation environment of the secondary battery module. When no crack occurred, it was marked as ×, and when cracks occurred, it was marked as o. Specifically, while the secondary battery module including the weld bead was constant voltage charged (up to 4.2 V) for 5 days under conditions of 0.4 MPa and 60°C, it was searched whether cracks occurred.

The evaluation results are shown in the following Table 1:

[Table 1]

|  |  | Example 1 | Example 2 | Comparative Example 1 | Comparative Example 2 |
|---|---|---|---|---|---|
| Concentration deviation (△C) (wt%) |  | 4 | 2 | 12 | 9 |
| Morphological symmetry | L1 | 0.92L2 | 0.98L2 | 1.45L2 | 1.10L2 |
|  | D1 | 1.05D2 | 0.98D2 | 1.30D2 | 1.20D2 |
| Copper concentration (wt%) |  | 8 | 4 | 39 | 31 |
| Tensile strength (arbitrary) |  | 0.99 | 1 | 0.87 | 0.93 |
| Whether high-temperature cracks occurred |  | × | × | ○ | × |
| Whether low-temperature cracks occurred |  | × | × | ○ | ○ |
| Whether embrittlement cracks occurred |  | × | × | ○ | ○ |

Referring to Table 1, in Example 1, since the weld bead had a concentration deviation (△C) of 4 wt% (Equation 1), satisfied the morphological symmetry (Equations 2 and 3) with L1=0.92L2 and D1=1.05D2, and had the copper concentration of 8 wt%, it was inferred that formation of the intermetallic compound (IMC) was minimized, and a weld bead having no occurrence of all of the high-temperature crack, low-temperature crack, and embrittlement crack and an excellent tensile strength of 0.99 was confirmed.

In addition, in Example 2, since the weld bead had the concentration deviation (△C) of 2 wt% (Equation 1), satisfied the morphological symmetry (Equations 2 and 3) with L1=0.98L2 and D1=0.98D2, and had the copper content of 4 wt%, a weld bead having the most minimized formation of the intermetallic compound (IMC) and the best tensile strength was confirmed.

However, in Comparative Example 1, since the weld bead did not satisfy Equations 1 to 3 with the concentration deviation (△C) of 12 wt%, and L1=1.45L2 and D1=1.30D2, and had the copper content of 39 wt%, it was inferred that a large amount of the intermetallic compound (IMC) was formed, a weld bead having occurrence of all of the high-temperature crack, low-temperature crack, and embrittlement crack and a significantly low tensile strength of 0.87 was confirmed.

In addition, in Comparative Example 2, since the weld bead did not satisfy Equations 1 to 3 with the concentration deviation (△C) of 9 wt%, and L1=1.10L2 and D1=1.20D2, and had the copper content of 31 wt%, it was inferred that no high-temperature crack occurred but the low-temperature crack and the embrittlement crack occurred, and more intermetallic compound (IMC) was formed than Examples 1 and 2, and a weld bead having a low tensile strength of 0.93 was confirmed.

According to an exemplary embodiment of the present disclosure, mechanical properties and electrical properties are improved to secure stable welding quality.

In addition, occurrences of high-temperature cracks, low-temperature cracks, and embrittlement cracks in the weld bead are all suppressed to improve welding reliability and long-term reliability of a battery.

In addition, formation of an intermetallic compound may be minimized in the weld bead.

The above description is only an example to which the principle of the present disclosure is applied, and other constitution may be further included without departing from the scope of the present disclosure.

Claims

1. A secondary battery module comprising:

a plurality of battery cells including electrode tabs; and
a bus bar connected to the plurality of electrode tabs so that the plurality of battery cells are electrically connected to each other,

wherein the bus bar includes a plate having a plurality of holes formed therein,

each of the electrode tabs of the plurality of battery cells is inserted into at least a part of the plurality of holes of the plate,

the electrode tab inserted into the hole and the plate are joined to each other by a weld bead,

one or more of the weld beads are included, and

the weld bead has a concentration deviation ($\triangle$C) satisfying the following Equation 1:

$$[\text{Equation 1}]$$

$$\text{Concentration deviation } (\triangle C) < 5 \text{ wt\%}$$

wherein the concentration deviation ($\triangle$C) refers to a difference between an average copper concentration (C1) of a left side and an average copper concentration (C2) of a right side based on a center line of the hole in a section of the weld bead in a thickness direction of the plate.

2. The secondary battery module of claim 1, wherein the weld bead satisfies the concentration deviation ($\triangle$C) of 3 wt% or less.

3. The secondary battery module of claim 1 or 2, wherein the concentration deviation ($\triangle$C) is measured by scanning electron microscopic (SEM)-energy dispersive X-ray spectroscopic (EDS) analysis.

4. The secondary battery module of any one of claims 1 to 3, wherein the weld bead is a weld bead having symmetry and is bilaterally symmetrical about the center line of the hole in the section of the weld bead in the thickness direction of the plate.

5. The secondary battery module of claim 4, wherein the weld bead having symmetry satisfies the following Equations 2 and 3:

$$[\text{Equation 2}]$$

$$0.90L2 \leq L1 \leq 1.1L2$$

$$[\text{Equation 3}]$$

$$0.90D2 \leq D1 \leq 1.1D2$$

wherein L1 and L2 refer to the shortest distances from intersecting points (P100 and P200) to boundary points (P1 and P2), and D1 and D2 refer to distances from the intersecting points (P100 and P200) to a joining interface of the weld bead in the direction perpendicular to L1 and L2, in which the boundary points (P1 and P2) refer to boundary points (P1 and P2) on a left side and a right side where the joining interface of the weld bead and a weld bead surface meet, and the intersecting points (P100 and P200) refer to intersecting points (P100 and P200) on a left side and a right side where lines perpendicular to the center line of the hole from the boundary points (P1 and P2) to the center line of the hole and imaginary lines (L100 and L200) extended from the boundary surface of the electrode tab intersect vertically.

6. The secondary battery module of any one of claims 1 to 5, wherein the weld bead includes a cover portion having a convex shape which covers the hole; and a pillar portion loaded into the hole in the section of the weld bead in the thickness direction of the plate.

7. The secondary battery module of any one of claims 1 to 6, wherein the electrode tab is made of aluminum and the plate is made of copper.

8. The secondary battery module of any one of claims 1 to 7, wherein the weld bead has a copper concentration of 40 wt% or less.

9. The secondary battery module of any one of claims 1 to 8, wherein the weld bead has a dilution rate of the plate of 40% or less.

10. The secondary battery module of any one of claims 1 to 9, wherein the battery cell is a pouch type battery cell.

FIG. 1

FIG. 2

FIG. 3

FIG. 4

FIG. 5

FIG. 6

FIG. 7

(a)                    (b)

FIG. 8

FIG. 9

FIG. 10

Europäisches
Patentamt

European
Patent Office

Office européen
des brevets

# EUROPEAN SEARCH REPORT

Application Number

EP 23 20 8667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0061945 A (SK INNOVATION CO LTD [KR]) 28 May 2021 (2021-05-28) * paragraphs [0004], [0009], [0040], [0055], [0082], [0099]; figures 2,3,4,8,9 * | 1-10 | INV. B23K26/00 B23K26/21 B23K31/12 H01M50/503 H01M50/516 |
| A | KUMAR NIKHIL ET AL: "In-depth evaluation of laser-welded similar and dissimilar material tab-to-busbar electrical interconnects for electric vehicle battery pack", JOURNAL OF MANUFACTURING PROCESSES, SOCIETY OF MANUFACTURING ENGINEERS, DEARBORN, MI, US, vol. 70, 25 August 2021 (2021-08-25), pages 78-96, XP086795939, ISSN: 1526-6125, DOI: 10.1016/J.JMAPRO.2021.08.025 [retrieved on 2021-08-25] * abstract; figure 17 * | 1-10 | ADD. B23K101/38 |

TECHNICAL FIELDS
SEARCHED        (IPC)

B23K

The present search report has been drawn up for all claims

| Place of search | Date of completion of the search | Examiner |
|---|---|---|
| Munich | 29 April 2024 | Seiderer, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 8667

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | Publication date | Patent family member(s) | Publication date |
|---|---|---|---|
| KR 20210061945 A | 28-05-2021 | NONE | |

EPO FORM P0459

For more details about this annex : see Official Journal of the European Patent Office, No. 12/82